# FASCICULE DE BREVET EUROPEEN

(11) **EP 3 000 224 B1**
(45) Date de publication et mention de la délivrance du brevet: **15.02.2017**
(21) Numéro de dépôt: 14725159.9
(22) Date de dépôt: 19.05.2014
(51) Int. Cl.: H04M 1/725, G06Q 20/32, G07F 7/08

(54) **PROCÉDÉ D'AUTO-ADAPTATION D'UNE QUALITÉ DE SIGNAL, DISPOSITIFS ET PROGRAMME D'ORDINATEUR CORRESPONDANTS**
VERFAHREN ZUR SELBSTANPASSUNG EINER SIGNALQUALITÄT SOWIE ENTSPRECHENDE VORRICHTUNGEN UND COMPUTERPROGRAMM
METHOD OF SELF-ADAPTATION OF A SIGNAL QUALITY, AND CORRESPONDING DEVICES AND COMPUTER PROGRAMME

(30) Priorité: 21.05.2013 FR 1354537
(43) Date de publication de la demande: 30.03.2016
(73) Titulaire: Ingenico Group, 75015 Paris (FR)
(72) Inventeur: ROTSAERT, Christopher, F-59290 Wasquehal (FR)
(74) Mandataire: Vidon Brevets & Stratégie
(86) Numéro de dépôt international: PCT/EP2014/060253
(87) Numéro de publication internationale: WO 2014/187781

(56) Documents cités:
- EP-A2- 1 874 014
- WO-A2-2013/027989
- KR-B1- 101 178 246
- US-A1- 2010 314 446
- US-A1- 2012 052 910
- US-A1- 2012 084 210
- US-A1- 2012 095 914
- US-A1- 2012 320 714

## Description

### 1. Domaine de l'invention

Le domaine de l'invention est celui des dispositifs de paiement électroniques, et plus précisément des terminaux de paiement portables, ou mobiles, pouvant être associés à des accessoires de paiement tels que des «Périphériques d'Acquisition Détachables (dits «PAD», ou « reader roam data » selon la terminologie anglaise), munis par exemple de moyens de lecture d'une carte électronique, comme une carte magnétique, à contact ou sans contact, et en particulier d'une carte de paiement électronique. Une simple connexion, par exemple via la prise audio du téléphone, d'un tel périphérique à un téléphone muni de fonctionnalités de communication par internet, permet en effet de disposer ensuite d'un terminal apte à effectuer des paiements. Par exemple, les données lues sur une carte magnétique peuvent être transmises, par le périphérique, qui peut ensuite les traiter ou les transmettre vers une application de paiement en ligne.

Plus particulièrement, l'invention concerne la qualité du signal audio échangé entre le terminal électronique et l'accessoire de paiement.

### 2. Art antérieur

Actuellement, le circuit audio est donc utilisé pour l'échange de données entre le terminal électronique et l'accessoire de paiement, et plus largement entre deux dispositifs électroniques. Ce circuit audio ne fait pas l'objet d'un standard et il est parfois difficile d'obtenir des échanges de signal de qualité suffisante pour permettre une exploitation des données portées par le signal audio. En effet, l'usage de ce circuit audio étant détourné pour transmettre des données et non un signal audio de voix ou de musique, des paramètres de transmission jugés optimaux pour de l'audio peuvent ne pas convenir pour de la transmission de données autres que de l'audio.

Par exemple, certains dispositifs électroniques tels que des smartphones exigent une amplitude de signal minimale pour la transmission d'un signal audio de voix ou de musique, alors que d'autres requièrent une amplitude plus réduite dans le but d'éviter la distorsion du signal. Or, actuellement, un accessoire de paiement connecté à un tel smartphone ne sait pas s'adapter à chaque type de smartphone auquel il peut être connecté.

De plus, une autre conséquence de ces disparités de fonctionnement des différents dispositifs électroniques est qu'il n'est pas possible de définir une qualité de signal standard, comme par exemple une amplitude standard, qui soit supportée par tous les dispositifs électroniques.

Par ailleurs, comme déjà dit, une qualité de signal standard définie pour de la voix ou de la musique pourrait ne pas être optimale pour des données dans une application de paiement telle que décrite ci-dessus.

Afin de tenter de pallier ces inconvénients, une technique est actuellement implémentée, dans certains accessoires de paiement, consistant à définir deux valeurs paramètres d'amplitude et à choisir l'un d'elles en fonction d'un paramètre transmis par le smartphone. Côté smartphone donc, un paramètre est défini en fonction d'une liste prédéterminée de smartphones. L'accessoire de paiement reçoit, en provenance du smartphone auquel il est connecté, le paramètre qui lui permet de définir la valeur à utiliser pour les transmissions ultérieures avec ce smartphone. L'inconvénient majeur de cette solution réside dans la liste prédéterminée, qui ne permet pas le support d'un nouveau modèle de dispositif électronique (non encore défini dans la liste). Cela impose donc des mises à jour régulières de la liste prédéterminée, et préalablement des tests et un suivi des nouveaux dispositifs électroniques. Et quand bien même cette liste serait mise à jour régulièrement, il subsiste le risque qu'un fabricant modifie son dispositif électronique tout en conservant la même référence, de sorte que certains dispositifs électroniques, typiquement des smartphones, ayant une même référence ne présentent pas les mêmes caractéristiques et ne soient pas compatibles avec les valeurs prédéfinies par les accessoires de paiement.

Il existe donc un besoin pour une solution prenant en compte ces inconvénients de l'art antérieur dans le but d'optimiser la qualité du signal échangé, via un canal audio, entre deux dispositifs électroniques.

Dans ce contexte il est fait référence aux documents d'art antérieur WO2013/027989, US2012/095914, US2012/084210, EP1874014, US2012/052910, KR101178246, US2010/314446 et US2012/320714.

### 3. Objectifs de l'invention

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique d'optimisation de la qualité d'un signal transmis via un canal audio entre deux dispositifs électroniques, ne nécessitant pas de connaissances préalables des caractéristiques techniques de l'un et/ou l'autre des dispositifs électroniques.

Un autre objectif d'au moins un mode de réalisation de l'invention est de fournir une telle technique qui soit utilisable pour tout dispositif électronique standard du marché.

Encore un autre objectif de l'invention est de fournir une telle technique qui soit simple à mettre en oeuvre et peu coûteuse.

### 4. Exposé de l'invention

L'invention concerne un procédé d'auto-adaptation d'une qualité de signal de données non audio échangé via un canal audio entre un terminal mobile et un accessoire de paiement électronique selon le préambule des revendications 1 à 4, aussi bien qu'un terminal mobile correspondant selon les revendications 15 et 18, aussi bien qu'un accessoire de paiement électronique correspondant selon les revendications 16 et 17 et aussi bien qu'un programme d'ordinateur correspondant selon la revendication 19.

Par exemple, le deuxième dispositif électronique est un terminal mobile et le premier dispositif électronique est un accessoire de paiement électronique connecté au terminal mobile via la prise audio du terminal mobile.

Ainsi, selon ce mode de réalisation particulier de l'invention, le procédé d'auto-adaptation s'applique aux échanges de signaux non audio entre un accessoire de paiement (présentant par exemple des moyens de lecture de carte sans contact ou des moyens de lecture de carte magnétique) et un terminal mobile (par exemple un smartphone présentant des fonctionnalités de paiement électronique), via la prise audio du terminal mobile. Par exemple, l'accessoire de paiement est connecté au terminal mobile via la prise audio (jack) du terminal mobile et le signal transmis de l'accessoire de paiement au terminal mobile correspond aux données lues sur une carte bancaire, ces données devant être traitées par le terminal mobile pour valider une transaction par exemple.

Selon un autre exemple, le premier dispositif électronique est un terminal mobile et le deuxième dispositif électronique est un accessoire de paiement électronique connecté au terminal mobile via la prise audio du terminal mobile.

Ainsi, selon ce mode de réalisation de l'invention, il s'agit d'optimiser la qualité du signal transmis par un téléphone mobile vers un accessoire de paiement, connecté au terminal mobile via la prise audio (jack) de ce dernier.

Bien entendu, les deux modes de réalisation particuliers décrits ci-dessous sont compatibles et le procédé d'auto-adaptation permet de déterminer des paramètres de transmission d'un signal transmis du premier dispositif vers le deuxième, ainsi que d'un signal transmis du deuxième dispositif vers le premier.

Selon l'invention, le procédé comprend une étape d'émission, par le premier dispositif électronique, d'un premier signal de référence vers le deuxième dispositif électronique, et au moins une itération des étapes suivantes :
- si, avant l'expiration d'une durée prédéterminée, le premier dispositif électronique reçoit une réponse en provenance du deuxième dispositif électronique :
   o modification, par le premier dispositif électronique, du premier signal de référence, en tenant compte d'au moins une information de qualité présente dans la réponse en provenance du deuxième dispositif électronique, délivrant un premier signal de référence modifié ;
   o émission, par le premier dispositif électronique, du premier signal de référence modifié, vers le deuxième dispositif électronique ;
- en l'absence de réponse en provenance du deuxième dispositif électronique à l'expiration de la durée prédéterminée, émission, par le premier dispositif électronique, d'un deuxième signal de référence distinct du premier signal de référence vers le deuxième dispositif électronique.

Ainsi, l'invention repose sur une approche nouvelle et inventive de l'ajustement de la qualité d'un signal de données non audio échangé entre deux dispositifs électroniques, via un canal audio (par exemple une prise audio sur les dispositifs) en permettant une auto-adaptation itérative de la qualité d'un signal de référence.

En effet, le canal audio utilisé pour l'échange de données non audio entre les deux dispositifs n'étant pas adapté à l'échange de données non audio, mais à l'échange de signaux audio, le signal de données non audio peut, selon ses paramètres de transmission, être dégradé par le canal audio de telle manière que les données ne soient plus exploitables. Or, ce signal échangé par le canal audio peut correspondre à des données lues par un premier dispositif électronique (par exemple un accessoire de paiement disposant d'un lecteur de carte) et transmises par ce premier dispositif à un deuxième dispositif (par exemple un terminal mobile) devant interpréter puis traiter ces données, par exemple pour valider une transaction bancaire. Ces données doivent donc être reçues avec une qualité optimale pour pouvoir être exploitées.

De plus, non seulement le canal audio peut dégrader le signal, mais les caractéristiques respectives d'émission et de réception des deux dispositifs électroniques sont également à prendre en considération pour la qualité du signal reçu. En effet, tout le circuit audio, comprenant les caractéristiques d'émission du premier dispositif, le canal de transmission via les prises audio, et les caractéristiques de réception du deuxième dispositif, peut dégrader le signal.

Ainsi, l'invention, selon ses différents modes de réalisation, met en oeuvre un procédé itératif basé sur une analyse, dans le dispositif récepteur, d'un signal de référence émis par l'autre dispositif, de façon à déterminer la qualité du signal reçu, par exemple en déterminant si les données extraites sont exploitables, et à ajuster les paramètres de transmission du signal de référence pour optimiser cette qualité.

Ainsi, selon ce mode de réalisation de l'invention, l'information de qualité émise par le deuxième dispositif permet au premier dispositif de modifier le signal de référence pour une autre itération d'auto-adaptation.

De ce fait, le procédé permet d'auto-adapter la qualité du signal échangé entre deux dispositifs électroniques, sans connaissance préalable de caractéristiques techniques de ces dispositifs ni du canal audio permettant l'échange de données et sans action utilisateur. En effet, le procédé itératif est entièrement automatique et basé sur un ou plusieurs échanges de signaux de référence permettant de déterminer, à terme, des paramètres de transmission du signal permettant d'obtenir une qualité optimale d'exploitation des données reçues via ce signal.

Par exemple, les premières itérations peuvent consister tout d'abord à identifier un signal de référence interprétable par le deuxième dispositif, et une fois ce signal trouvé, à affiner certains de ses paramètres de transmission, de façon à pouvoir mettre en oeuvre une communication optimale entre les deux dispositifs.

Ainsi, le premier signal de référence transmis par le premier dispositif peut ne pas être reçu ou interprété par le deuxième dispositif, qui ne répond donc pas au premier dispositif suite à cet envoi du signal de référence. C'est pourquoi un « timer » est mis en oeuvre dans le premier dispositif, qui envoie un autre signal de référence s'il n'a pas reçu de réponse du deuxième dispositif à l'expiration du timer. Dans ce cas, le deuxième signal de référence présente des paramètres de transmission différents du premier, de façon à « tester » un autre type de signal. Un nombre maximal de tentatives peut être prédéfini, de façon à stopper le processus d'auto-adaptation en cas de non réponse du deuxième dispositif à toutes les tentatives précédentes.

En revanche, lorsque le deuxième dispositif répond au premier dispositif, suite à la transmission du premier signal de référence, le deuxième dispositif tient compte de cette réponse, et en particulier d'une information de qualité présente dans la réponse, pour modifier un ou plusieurs paramètres de transmission du premier signal de référence, et renvoyer ainsi un premier signal de référence modifié au deuxième dispositif, afin d'optimiser la communication entre les deux dispositifs.

Selon une caractéristique particulière de l'invention, le procédé comprend au moins une itération des étapes suivantes :
- réception, par le deuxième dispositif électronique, d'un signal de référence émis par le premier dispositif électronique selon le procédé décrit ci-dessus ;
- analyse, dans le deuxième dispositif électronique, du signal de référence reçu, l'analyse délivrant au moins une information représentative de la qualité du signal de référence, notée information de qualité ;
- émission, par le deuxième dispositif électronique vers le premier dispositif électronique, de l'information de qualité.

Ainsi, l'invention, selon ses différents modes de réalisation, met en oeuvre un procédé itératif basé sur une analyse, dans le dispositif récepteur, d'un signal de référence émis par l'autre dispositif, de façon à déterminer la qualité du signal reçu, par exemple en déterminant si les données extraites sont exploitables, et à ajuster les paramètres de transmission du signal de référence pour optimiser cette qualité.

En particulier, l'étape d'analyse tient compte d'au moins un critère prédéterminé représentatif d'une qualité souhaitée.

Ainsi, selon ce mode de réalisation de l'invention, l'analyse du signal de référence reçu tient compte d'un critère prédéterminé de qualité de référence, tel que, lorsque ce critère est atteint, le signal reçu est considéré comme de qualité optimale.

Par exemple, ce critère prédéterminé est un paramètre propre au dispositif récepteur, tel qu'un taux de distorsion maximum admis, un débit maximum admis, une amplitude minimum requise...

Par exemple, le critère prédéterminé correspond à un seuil maximum de distorsion.

Par exemple, le critère prédéterminé correspond à un seuil maximum de distorsion au-delà duquel les données extraites du signal reçu ne peuvent pas être exploitées par le dispositif récepteur.

Selon un aspect particulier de l'invention, l'étape d'analyse comprend les sous-étapes suivantes :
- traitement du signal de référence délivrant au moins un paramètre de qualité du signal de référence ;
- comparaison du paramètre de qualité avec le critère prédéterminé, délivrant l'information de qualité.

Ainsi, selon ce mode de réalisation de l'invention, l'étape d'analyse du signal de référence reçu consiste d'abord en un traitement du signal reçu, par exemple un calcul du taux de distorsion du signal, délivrant un paramètre tel que le taux de distorsion du signal reçu, puis une comparaison de ce paramètre calculé avec un seuil maximum de distorsion autorisé.

Cette comparaison permet ensuite de déterminer quels paramètres de transmission du signal de référence sont à modifier, ou peuvent être modifiés, pour optimiser la qualité du signal reçu.

Par exemple, l'information de qualité appartient au groupe comprenant au moins :
- une information de réduction ou d'augmentation d'amplitude du signal de référence;
- une information de modification de fréquence du signal de référence ;
- une information de modification de la forme du signal de référence ;
- une information de modification du débit du signal de référence ;
- une information de validation du signal de référence ;
- une information combinant au moins deux des informations précitées.

Ainsi, par exemple, une distorsion trop élevée du signal de référence peut être corrigée par une réduction de l'amplitude du signal de référence et/ou une modification de la fréquence de ce signal de référence et/ou une modification de la forme du signal de référence (sinusoïdal,...) et/ou une modification du débit du signal de référence... Dans ce cas, l'information représentative de la qualité du signal reçu (« information de qualité ») émise par le deuxième dispositif correspond à une indication pour modifier le signal de référence pour une autre itération d'auto-adaptation.

Lorsque la qualité du signal de référence reçu est jugée optimale, alors l'information de qualité émise par le deuxième dispositif correspond à une validation des paramètres du dernier signal de référence émis par le premier dispositif.

Par exemple, le signal de référence correspond à un signal sinusoïdal d'une fréquence et d'une amplitude fixes et l'information de qualité correspond au signal de référence modifié en fonction de l'étape d'analyse.

Dans ce cas particulier, où le signal de référence est un signal blanc, l'information de qualité renvoyée par le deuxième dispositif est un signal de référence modifié, tenant compte des distorsions observées sur le signal reçu, permettant ensuite au premier dispositif de déterminer des paramètres de transmission tenant compte de ces distorsions.

Selon un mode de réalisation particulier de l'invention, le procédé comprend une étape de mémorisation, dans le premier et/ou le deuxième dispositif électronique, d'au moins un paramètre de transmission du signal de données, lorsque l'information de qualité est une information de validation du signal de référence.

Ainsi, selon ce mode de réalisation de l'invention, lorsque les itérations successives du procédé d'auto-adaptation ont permis d'aboutir à un signal de référence présentant une qualité optimale pour le dispositif de réception, les paramètres de transmission de ce signal de référence de qualité optimale sont mémorisés, afin d'être utilisés ultérieurement pour les échanges de signaux entre ces deux dispositifs électroniques.

Par exemple, les valeurs d'amplitude et de fréquence du signal de référence de qualité optimale sont mémorisées dans le premier dispositif, c'est-à-dire le dispositif émetteur. Ces paramètres peuvent également être mémorisés dans le dispositif récepteur, de façon à permettre une meilleure auto-adaptation ultérieure, avec un autre dispositif émetteur par exemple.

Par exemple, le paramètre de transmission appartient au groupe comprenant :
- une valeur d'amplitude de signal de données ;
- une valeur de fréquence de signal de données ;
- un type de forme de signal de données ;
- un prétraitement de signal de données ;
- une information combinant au moins deux des valeurs précitées.

En particulier, l'étape de mémorisation mémorise également un paramètre d'identification du premier et/ou deuxième dispositif électronique.

Ainsi, selon ce mode de réalisation de l'invention, la sauvegarde du ou des paramètres de transmission du signal associe ce ou ces paramètres à un identifiant du dispositif récepteur et/ou un identifiant du dispositif émetteur.

Par exemple, lorsque le premier dispositif est un accessoire de paiement connecté à un téléphone mobile, via la prise audio du téléphone mobile, l'accessoire de paiement peut mémoriser les paramètres de transmission d'un signal de qualité optimale associés au téléphone mobile, de façon à pouvoir réutiliser ces paramètres pour toutes les communications avec ce téléphone mobile. Ainsi, si l'accessoire de paiement est utilisé avec un autre téléphone mobile, ou un autre dispositif électronique, d'autres paramètres associés à cet autre dispositif électronique peuvent également être mémorisés. De cette manière, l'accessoire de paiement peut optimiser ses communications avec différents dispositifs électroniques, en mémorisant des paramètres de transmission issus d'une ou plusieurs phases d'auto-adaptation mises en oeuvre avec chacun de ces dispositifs électroniques distincts.

Selon un aspect particulier de l'invention, le procédé comprend une étape de transmission, par le premier dispositif électronique vers le deuxième dispositif électronique, d'au moins un signal de données, l'étape de transmission tenant compte du paramètre de transmission mémorisé lors de l'étape de mémorisation.

Ainsi, selon ce mode de réalisation de l'invention, une fois le ou les paramètres de transmission mémorisés, les échanges entre le premier et le deuxième dispositifs peuvent tenir compte de ces paramètres, afin d'optimiser le traitement des données échangées. De ce fait, les signaux transmis par le premier dispositif vers le second tiennent compte de ce ou ces paramètres de transmission et la qualité de ces signaux est donc optimale pour une exploitation des données échangées.

Par exemple, le deuxième dispositif électronique est un terminal mobile et le premier dispositif électronique est un accessoire de paiement électronique connecté au terminal mobile via la prise audio du terminal mobile.

Ainsi, selon ce mode de réalisation particulier de l'invention, le procédé d'auto-adaptation s'applique aux échanges de signaux entre un accessoire de paiement (présentant par exemple des moyens de lecture de carte sans contact ou des moyens de lecture de carte magnétique) et un terminal mobile (par exemple un smartphone présentant des fonctionnalités de paiement électronique), via la prise audio du terminal mobile. Par exemple, l'accessoire de paiement est connecté au terminal mobile via la prise audio (jack) du terminal mobile et le signal transmis de l'accessoire de paiement au terminal mobile correspond aux données lues sur une carte bancaire, ces données devant être traitées par le terminal mobile pour valider une transaction par exemple.

Selon un autre exemple, le premier dispositif électronique est un terminal mobile et le deuxième dispositif électronique est un accessoire de paiement électronique connecté au terminal mobile via la prise audio du terminal mobile.

Ainsi, selon ce mode de réalisation de l'invention, il s'agit d'optimiser la qualité du signal transmis par un téléphone mobile vers un accessoire de paiement, connecté au terminal mobile via la prise audio (jack) de ce dernier.

Bien entendu, les deux modes de réalisation particuliers décrits ci-dessus sont compatibles et le procédé d'auto-adaptation permet de déterminer des paramètres de transmission d'un signal transmis du premier dispositif vers le deuxième, ainsi que d'un signal transmis du deuxième dispositif vers le premier.

Selon cet exemple, l'information de qualité correspond à une information représentative d'un niveau de charge de l'accessoire de paiement.

Ainsi, selon ce mode de réalisation de l'invention, le procédé d'auto-adaptation permet d'utiliser, de manière optimale, le canal audio entre le terminal mobile et l'accessoire de paiement pour charger ce dernier. Par exemple, le signal transmis du terminal mobile vers l'accessoire de paiement correspond à un signal continu permettant de charger l'accessoire de paiement, et le procédé selon l'invention permet de définir les caractéristiques de ce signal (amplitude, durée, ...) pour un chargement optimal de l'accessoire de paiement.

En particulier, le procédé, dans cet exemple, comprend une étape préalable de décharge de l'accessoire de paiement.

Ainsi, afin d'optimiser l'auto-adaptation appliquée au chargement de l'accessoire de paiement, ce dernier se décharge préalablement. En effet, l'auto-adaptation permet dans ce cas de déterminer les caractéristiques d'un signal permettant de recharger complètement l'accessoire de paiement, dans des conditions précises où celui-ci est complètement déchargé. De cette manière, un signal optimal de charge est déterminé, permettant de recharger complètement l'accessoire de paiement tout en optimisant par exemple la durée de ce signal, ainsi que son amplitude. Ainsi, la durée de l'opération de rechargement de l'accessoire de paiement est réduite, ainsi que son impact sur la propre charge du terminal mobile, en émettant un signal de charge d'amplitude et de durée optimisées.

L'invention concerne également un dispositif électronique comprenant des moyens d'auto-adaptation d'une qualité de signal de données non audio échangé via un canal audio vers un dispositif électronique distinct, les moyens d'auto-adaptation comprenant au moins les moyens suivants :
- des moyens d'émission d'un signal de référence vers le dispositif électronique distinct ;
- des moyens de modification du signal de référence, en tenant compte d'au moins une information de qualité présente dans la réponse en provenance du dispositif électronique distinct, délivrant un signal de référence modifié.

Un tel dispositif est notamment apte à mettre en oeuvre les étapes du procédé d'auto-adaptation décrit ci-dessus et peut être par exemple un terminal mobile ou un accessoire de paiement.

Selon un autre mode de réalisation, l'invention concerne un dispositif électronique comprenant des moyens d'auto-adaptation d'une qualité de signal de données non audio échangé via un canal audio vers un dispositif électronique distinct, les moyens d'auto-adaptation comprenant au moins les moyens suivants :
- des moyens de réception d'un signal de référence émis par le dispositif électronique distinct décrit ci-dessus ;
- des moyens d'analyse du signal de référence, les moyens d'analyse délivrant au moins une information représentative de la qualité du signal de référence, notée information de qualité ;
- des moyens d'émission, vers le dispositif électronique distinct, de l'information de qualité.

Un tel dispositif est notamment apte à mettre en oeuvre les étapes du procédé d'auto-adaptation décrit ci-dessus et peut être par exemple un terminal mobile ou un accessoire de paiement.

Enfin, l'invention concerne également un programme d'ordinateur comprenant des instructions de code de programme pour l'exécution des étapes du procédé d'auto-adaptation tel que décrit ci-dessus, lorsque le programme est exécuté sur un ordinateur.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- La figure 1 illustre un exemple de système dans lequel le procédé d'auto-adaptation peut être mis en oeuvre ;
- les figures 2a et 2b présentent les principales étapes du procédé d'auto-adaptation selon un mode de réalisation particulier de l'invention, respectivement dans le premier et le deuxième dispositif impliqués dans l'auto-adaptation ;
- les figures 3a à 3c présentent des diagrammes de séquences d'auto-adaptation selon plusieurs modes de réalisation de réalisation de l'invention mis en oeuvre dans un système tel qu'illustré en figure 1 ;
- les figures 4 et 4b présentent deux exemples de dispositif selon un mode de réalisation particulier de l'invention.

### 6. Description d'un mode de réalisation de l'invention

### 6.1 Principe général

Le principe général de l'invention repose sur un processus itératif d'auto-adaptation de la qualité d'un signal de données non audio transmis par un premier dispositif vers un deuxième dispositif, via un canal audio, permettant de déterminer au moins un paramètre de transmission de ce signal de données de façon à obtenir une qualité optimale pour les transmissions ultérieures.

Pour ce faire, l'auto-adaptation est basée sur la transmission, par le premier dispositif vers le deuxième dispositif, d'un signal de référence, lequel est analysé, lorsqu'il est possible de le faire, dans le deuxième dispositif de manière à émettre en retour une information représentative de la qualité du signal de référence, dite information de qualité.

Selon les différents modes de réalisation de l'invention, cette information de qualité permet au premier dispositif de modifier le signal de référence de manière à améliorer la qualité du signal reçu par le deuxième dispositif. Les étapes d'analyse du signal de référence et de transmission d'une information de qualité sont itérées à nouveau, ainsi que celle de modification du signal de référence, jusqu'à obtention d'une qualité optimale du signal de référence reçu.

Le processus itératif peut être mis en oeuvre dans l'un et/ou l'autre des deux dispositifs, de manière à optimiser les transmissions dans l'un et/ou l'autre sens de communication.

L'analyse de la qualité du signal de référence reçu peut consister en tout traitement permettant de déterminer si le signal reçu peut être exploitable, par exemple en calculant le taux de distorsion du signal reçu, ou en comparant son amplitude avec une amplitude minimale requise ou une amplitude maximale tolérée ...

Le procédé d'auto-adaptation selon les différents modes de réalisation de l'invention peut être mis en oeuvre de manière systématique à la connexion entre les deux dispositifs, comme une sorte de fonction d'initialisation d'un périphérique sur un téléphone par exemple. Ainsi, tous les échanges ultérieurs entre les deux dispositifs bénéficient de cette auto-adaptation et présentent une qualité de signal optimisée.

Le procédé d'auto-adaptation selon les différents modes de réalisation de l'invention peut également être déclenché au moment de la première transmission de données entre les dispositifs ou lorsque plusieurs transmissions de données ont échoué entre les dispositifs.

Ou encore, le procédé d'auto-adaptation selon les différents modes de réalisation de l'invention peut être déclenché sur requête de l'utilisateur des dispositifs, par exemple lorsque l'application d'auto-adaptation téléchargée dans son téléphone mobile lui propose de mettre en oeuvre une itération d'auto-adaptation.

Selon encore un autre cas, les différentes étapes du procédé d'auto-adaptation peuvent être mises en oeuvre une fois, afin d'obtenir une information de qualité sur le signal de référence reçu et de laisser le choix à l'utilisateur, en fonction de cette information de qualité, de mettre en oeuvre ou non d'autres itérations du procédé d'auto-adaptation. Par exemple, l'utilisateur peut choisir de chercher à obtenir la qualité optimale de transmission entre les deux dispositifs, en relançant une ou plusieurs itérations du processus d'auto-adaptation, ou bien se « contenter », par exemple pour gagner du temps, d'une qualité suffisante bien que non optimale.

Après l'auto-adaptation, les paramètres optimisés peuvent être stockés localement, dans l'un et/ou l'autre des dispositifs, ou centralisés sur une base de données sur un serveur pour permettre par exemple d'enrichir une liste de dispositifs supportés (même avec une auto-adaptation selon l'un des modes de réalisation particuliers de l'invention, certains dispositifs peuvent ne pas être supportés) et/ou de fournir une information de restriction sur les performances (si seuls des paramètres bas débits sont supportés par exemple).

Par ailleurs, une première phase du processus d'auto-adaptation consiste, dans certains cas, à identifier un signal de référence interprétable par le deuxième dispositif. En effet, le signal de référence transmis par le premier dispositif peut tout simplement n'être pas interprétable par le deuxième dispositif, donc considéré comme non reçu, car ses paramètres ne sont pas supportés par ce dernier. Dans ce cas, le deuxième dispositif ne peut pas répondre au premier, qui doit donc renvoyer un signal de référence distinct, pour tenter de se faire « comprendre », ou « entendre », par le deuxième dispositif.

Pour ce faire, un « timer », d'une durée prédéterminée, est mis en oeuvre dans le premier dispositif, de façon à ce que celui-ci n'attende pas indéfiniment une réponse du deuxième dispositif. Ainsi, si à l'expiration du timer, le deuxième dispositif n'a pas répondu au premier dispositif, alors ce dernier réitère sa transmission avec un signal de référence distinct (par exemple de type différent), et ce par exemple jusqu'à un nombre maximal prédéterminé de tentatives.

Une fois qu'un type de signal de référence est reçu et interprété par le deuxième dispositif, ses paramètres sont en quelque sorte « affinés » dans le but d'obtenir un signal de référence de qualité optimale, afin d'optimiser les communications ultérieures entre les deux dispositifs.

### 6.2 Description d'un mode de réalisation

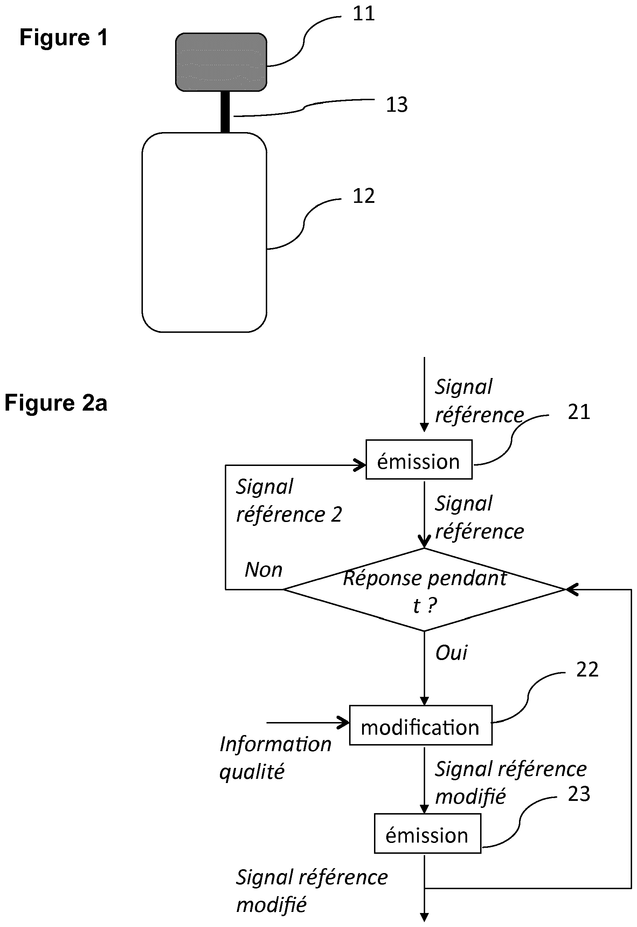

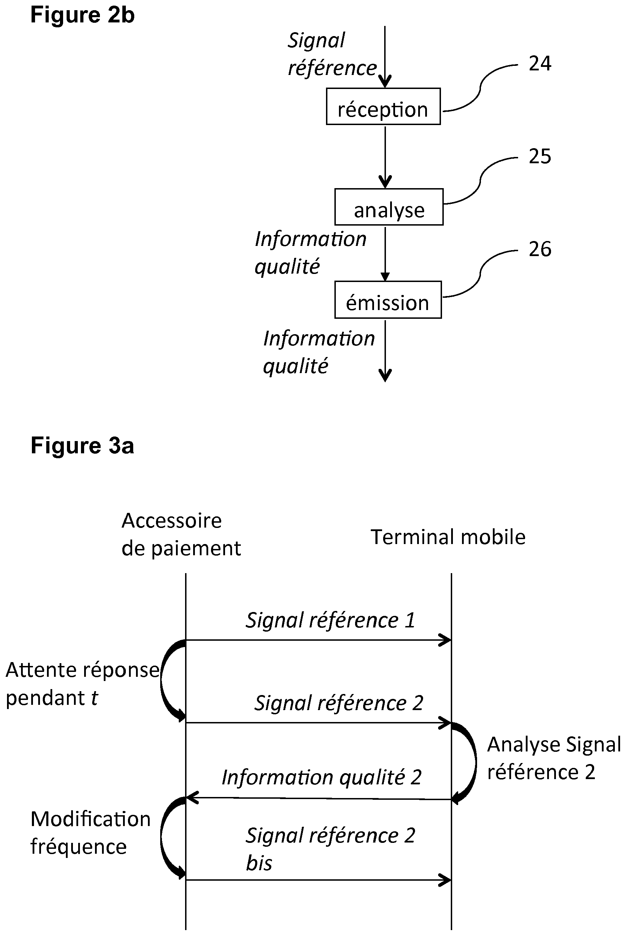

On présente maintenant, en relation avec les figures 2a et 2b, les principales étapes du procédé d'auto-adaptation selon un mode de réalisation particulier de l'invention, mises en oeuvre respectivement dans un premier et un deuxième dispositifs d'un système tel qu'illustré en figure 1.

Dans ce système, un premier dispositif 11 (par exemple un accessoire de paiement) est connecté à un deuxième dispositif 12 (par exemple un terminal mobile) via une prise audio 13, par exemple la prise jack du terminal mobile.

Dans une application particulière, l'accessoire de paiement 11 permet de lire, avec ou sans contact, les données d'une carte de paiement (non représentée), puis de transmettre, via le canal audio 13, les données lues au terminal mobile 12. Ce terminal mobile 12 exploite ces données lues, via une application de paiement locale ou distante, par exemple pour valider une transaction.

Quel que soit le mode de déclenchement du procédé d'auto-adaptation (automatique à la connexion des deux dispositifs, au moment du premier échange de données, ... comme décrit ci-dessus), une première étape 21 d'émission d'un signal de référence, noté *Signal référence,* présentant des paramètres de transmission prédéterminés, est mise en oeuvre par le premier dispositif 11. Un « timer » d'une durée prédéterminée test déclenché à l'émission de ce signal de référence, de façon à n'attendre une réponse du deuxième dispositif que pendant cette durée t.

Ainsi, si le deuxième dispositif 12 ne répond pas au premier dispositif 11 avant l'expiration du timer, par exemple parce qu'il n'a pas reçu le signal de référence, ou pas pu interprété ce signal de référence comme étant un signal d'auto-adaptation, alors le premier dispositif réitère cette étape 21 d'émission, avec un signal de référence distinct du premier (noté par exemple *Signal référence 2),* par exemple d'un autre type de famille de signal de référence. Un nouveau timer est déclenché et les étapes sont réitérées, jusqu'à identifier un signal de référence interprétable par le deuxième dispositif ou jusqu'à ce qu'un nombre maximal prédéterminé de tentatives soit atteint.

En revanche, si le deuxième dispositif 12 répond au premier dispositif 11 avant l'expiration du timer, le premier dispositif tient compte de cette réponse, et particulièrement de l'information de qualité présente dans cette réponse (décrite plus précisément ci-après), pour mettre en oeuvre une étape 22 de modification du signal de référence et une étape d'émission 23 d'un signal de référence modifié. Là-encore, un timer est déclenché et les étapes 22 et 23 peuvent être réitérées, jusqu'à déterminer un signal de référence de qualité optimale, comme décrit ci-dessous.

Dans le deuxième dispositif 12 (là encore quel que soit le mode de déclenchement du procédé d'auto-adaptation), une première étape 24 de réception consiste à recevoir un signal dit de référence, noté *Signal référence,* présentant des paramètres de transmission prédéterminés, émis par le premier dispositif 11.

On se place ci-après dans le cas où ce signal de référence transmis par le premier dispositif 11 est interprétable par le deuxième dispositif 12.

Par exemple, ce signal de référence présente une amplitude élevée, une forme sinusoïdale, un débit classique ... ou bien une amplitude, une fréquence et un type de format particuliers avec ou sans prétraitement (format complexe de signal).

Selon un autre exemple, décrit plus en détails ci-dessous, ce signal de référence est un signal blanc.

Selon encore un autre exemple, également décrit ci-dessous, ce signal de référence est un signal continu permettant de charger le deuxième dispositif.

Une fois reçu, ce signal de référence est analysé, lors d'une étape 25 d'analyse, dans le deuxième dispositif 12, de manière à évaluer sa qualité, dans le but d'optimiser les échanges ultérieurs de données entre ces deux dispositifs 11 et 12, via le canal audio 13.

Quel que soit le type d'analyse effectuée lors de l'étape 25, celle-ci est mise en oeuvre en fonction d'une application particulière d'exploitation des données reçues ultérieurement et tient compte par exemple d'un ou plusieurs critères prédéterminés représentatif(s) d'une qualité de signal souhaitée.

Par exemple, l'analyse 25 du signal de référence reçu consiste à comparer son amplitude avec une amplitude maximale tolérée par le dispositif 12. Un autre type d'analyse peut consister en un calcul du taux de distorsion du signal de référence reçu, au-delà duquel les données transmises via ce signal ne sont plus exploitables par le deuxième dispositif 12... Encore un autre type d'analyse peut consister en une évaluation d'un niveau de gigue par rapport à une tolérance donnée ou une évaluation par rapport à un critère qualité spécifique ou une réponse comprise dans un gabarit donné.

Le résultat de cette étape d'analyse 25 consiste donc en quelque sorte en une évaluation de la qualité du signal de référence reçu, sous la forme d'une information de qualité, notée *Information qualité.* Cette information de qualité est ensuite émise, lors d'une étape 26 d'émission, par le deuxième dispositif vers le premier dispositif. Cette information de qualité a pour objet de permettre au premier dispositif de modifier, le cas échéant, un ou plusieurs paramètres de transmission du signal de référence, afin de transmettre un signal de référence modifié au deuxième dispositif, pour que ce dernier évalue la qualité de ce signal de référence modifié reçu, lors d'une deuxième itération des étapes du procédé d'auto-adaptation selon ce mode de réalisation de l'invention.

Par exemple, lorsque l'analyse 25 du signal de référence reçu a abouti sur un constat de qualité insuffisante de ce signal de référence reçu, l'information de qualité consiste directement en une indication de modification d'un ou plusieurs paramètres de transmission. Ainsi, l'information de qualité peut prendre la forme d'une information de réduction/augmentation d'amplitude du signal de référence, et/ou d'une information de modification de fréquence du signal de référence et/ou d'une information de modification de la forme du signal de référence et/ d'une information de modification du débit du signal de référence.

En revanche, si l'analyse 25 du signal de référence reçu a abouti sur un constat de qualité optimale de ce signal de référence reçu, l'information de qualité consiste en une information de validation du signal de référence. Dans ce cas, les itérations des étapes 24 à 26 prennent fin et une étape de mémorisation (non représentée) d'au moins un paramètre de transmission est mise en oeuvre, dans le premier dispositif 11. L'auto-adaptation de la qualité du signal échangé entre le premier et le deuxième dispositif est dans ce cas terminée et a permis de définir au moins un paramètre de transmission des signaux échangés ultérieurement entre le premier et le deuxième dispositif, permettant d'obtenir une qualité optimisée du signal reçu par le deuxième dispositif.

Par exemple, ce paramètre de transmission correspond à une amplitude et/ou un débit et/ou une fréquence ...

De plus, selon une variante de réalisation, un identifiant du deuxième dispositif peut être associé à ce ou ces paramètres de transmission, au moment de la mémorisation. De cette manière, des paramètres de transmission d'un signal seraient associés, dans le premier dispositif, à un deuxième dispositif particulier.

Il est à noter que cette étape de mémorisation peut également être mise en oeuvre dans le deuxième dispositif, afin que ce dernier dispose également des paramètres de qualité optimale d'une transmission d'un signal via un premier dispositif. Par exemple, ces paramètres pourraient être fournis ultérieurement à ce premier dispositif lors d'une connexion de celui-ci au deuxième dispositif, permettant ainsi éventuellement de s'affranchir d'un nouveau processus d'auto-adaptation.

Selon une variante de réalisation, le signal de référence est un signal blanc (signal sinusoïdal d'une fréquence et d'une amplitude fixes) et l'étape d'analyse 25 de ce signal reçu comprend une première sous-étape de calcul de distorsion sur le signal reçu et une deuxième sous-étape de calcul d'une fonction inverse de cette distorsion, délivrant un signal de référence modifié tenant compte de la distorsion observée. Ce signal de référence modifié, une fois transmis via le canal audio et distordu par ce canal, sera en fait un signal exploitable par le deuxième dispositif. Dans cette variante, l'information de qualité correspond donc à ce signal modifié que le premier dispositif pourra retransmettre au deuxième dispositif afin que celui-ci vérifie que la qualité du signal reçu est effectivement optimale.

### 6.3 Description de deux exemples d'application

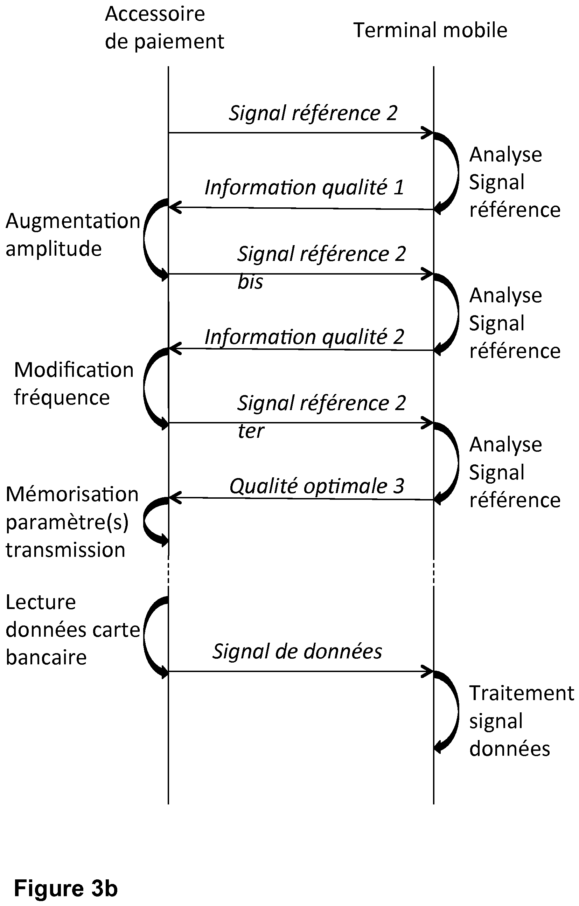

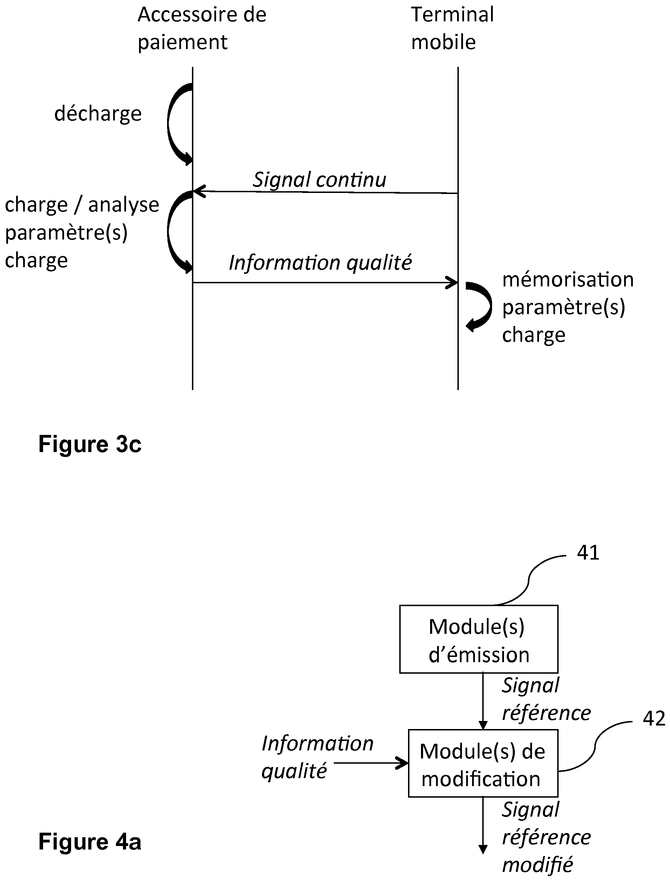

On présente maintenant, en relation avec les figures 3a à 3c, deux exemples de diagrammes de séquences d'auto-adaptation, respectivement selon un premier (figures 3a et 3b) et un second mode de réalisation (figure 3c).

Dans le premier mode de réalisation, on considère un échange de données entre l'accessoire de paiement 11 et le terminal mobile 12, via le canal audio 13. L'auto-adaptation selon ce mode de réalisation de réalisation de l'invention consiste dans un premier temps à identifier un signal de référence interprétable par le deuxième dispositif (figure 3a) et dans un deuxième temps à optimiser la qualité de ce signal de référence transmis par l'accessoire de paiement au terminal mobile, de façon que celui-ci puisse exploiter de manière optimale les données transmises, par exemple des données lues d'une carte bancaire par l'accessoire de paiement.

Comme illustré en figure 3a, l'accessoire de paiement transmet donc une première fois un signal de référence, noté *Signal référence 1,* vers le terminal mobile. Un timer t est déclenché dans l'accessoire de paiement, de façon à ce que ce dernier n'attende une réponse du terminal mobile que pendant cette durée prédéterminée t. Si le terminal mobile n'a pas répondu à l'accessoire de paiement avant l'expiration du timer, ce dernier émet un deuxième signal de référence, noté *Signal référence 2,* par exemple de type différent du *Signal référence 1.* On considère ici que ce signal est cette fois-ci interprétable par le terminal mobile, qui peut donc mettre en oeuvre une analyse du *Signal référence 2* et répondre à l'accessoire de paiement en transmettant notamment au moins une information de qualité du signal issue de cette analyse, notée *Information qualité* 1 (consistant par exemple en une information de réduction d'amplitude). Le *Signal référence 2* est donc interprétable par le terminal mobile et ses paramètres peuvent être modifiés, via le processus d'auto-adaptation selon ce mode de réalisation de l'invention, jusqu'à déterminer les paramètres permettant d'obtenir une qualité optimale de communication entre l'accessoire de paiement et le terminal mobile.

L'accessoire de paiement prend donc en considération cette information de réduction d'amplitude pour modifier le signal de référence *Signal référence 2* et émettre un *Signal référence 2 bis* vers le terminal mobile. Les étapes suivantes sont décrites ci-après en relation avec la figure 3b.

Comme illustré en figure 3b, on considère que l'accessoire de paiement transmet un signal de référence, noté *Signal référence 2,* que le terminal mobile analyse, lors d'une première itération de l'étape 25 d'analyse. Cette analyse détecte par exemple une amplitude trop élevée du *Signal référence 2* et délivre une première information de qualité, notée *Information qualité 1,* consistant en une information de réduction d'amplitude.

Cette première information de qualité est reçue par l'accessoire de paiement, qui met en oeuvre une modification du signal de référence, c'est-à-dire ici une réduction de son amplitude, pour transmettre au terminal mobile un signal de référence modifié, noté *Signal référence 2 bis.* Une deuxième itération de l'étape 25 d'analyse est alors mise en oeuvre dans le terminal mobile, détectant cette fois-ci une fréquence non adaptée du signal reçu et délivrant une deuxième information de qualité, notée *Information qualité 2,* consistant en une information de modification de fréquence (par exemple avec un paramètre indiquant une ou plusieurs fréquences adéquates).

Cette deuxième information de qualité est reçue par l'accessoire de paiement, qui met en oeuvre une modification du signal de référence, c'est-à-dire ici une modification de sa fréquence, pour transmettre au terminal mobile un signal de référence modifié, noté *Signal référence 2 ter.* Une troisième itération de l'étape 25 d'analyse est alors mise en oeuvre dans le terminal mobile, détectant alors une qualité suffisante de ce signal reçu et délivrant une troisième information de qualité, notée *Information qualité 3,* consistant donc en une validation de la qualité du signal reçu (*Signal référence 2 ter).*

Cette troisième information de qualité est reçue par l'accessoire de paiement, qui met alors en oeuvre une étape de mémorisation de certains paramètres de transmission, tels que par exemple l'amplitude du signal de référence *Signal référence 2 bis* et la fréquence du signal de référence *Signal référence 2 ter,* ainsi qu'éventuellement d'autres paramètres de transmission communs aux signaux de référence successifs émis par l'accessoire de paiement (par exemple la forme du signal : sinusoïdal, carré ou format complexe).

Cette étape de mémorisation peut également associer ces différents paramètres à un identifiant du terminal mobile.

Ainsi, ces différents paramètres de transmission seront utilisés ultérieurement par l'accessoire de paiement pour les transmissions de signaux vers le terminal mobile, de façon à optimiser la qualité des signaux transmis. Par exemple, l'accessoire de paiement transmet au terminal mobile des données lues d'une carte bancaire, dans un signal respectant ces paramètres mémorisés, permettant ainsi au terminal mobile de traiter ces données de manière optimale, c'est-à-dire de les exploiter pour l'application concernée (par exemple une application de transaction par carte bancaire).

Dans le deuxième mode de réalisation, illustré en figure 3c, on considère que l'accessoire de paiement 11 connecté au terminal mobile 12, via le canal audio 13, peut se recharger via ce canal, par un signal continu transmis par le terminal mobile.

En effet, la plupart des périphériques ou accessoires de paiement ne comportent pas de batterie et l'énergie de ces accessoires est fournie par un signal audio standard, permettant de charger une capacité pour alimenter l'accessoire de paiement le temps nécessaire par exemple à la lecture et au traitement des données d'une carte bancaire. Malheureusement, cette charge est parfois insuffisante et il est alors nécessaire de prévoir une pile dans l'accessoire de paiement, pour compenser le manque de charge.

Ce deuxième mode de réalisation de l'invention permet de s'affranchir de la nécessité d'une pile, en mettant en oeuvre le procédé d'auto-adaptation dans le but d'optimiser le temps de charge, la complétude de la charge ainsi que d'économiser les ressources du terminal mobile fournissant le signal de charge, tout en assurant un fonctionnement optimal de l'accessoire de paiement avec le niveau de charge maximal.

Afin d'optimiser le processus d'auto-adaptation dans le cadre de la charge de l'accessoire de paiement, une étape préalable de décharge, totale ou quasi-totale, est mise en oeuvre. Ainsi, l'étape de charge pourra être considérée comme une référence, partant d'un accessoire de paiement déchargé, et donc d'un état de charge connu.

Ensuite, le terminal mobile émet un signal de référence continu, permettant d'atteindre un niveau de charge maximale de l'accessoire de paiement au bout d'un certain temps. Ainsi, lorsque l'accessoire de paiement a atteint ce niveau de charge maximale, il transmet au terminal mobile une information de qualité, notée « *Information qualité* », représentative de la durée de charge par exemple. En fonction de cette *Information qualité,* le terminal mobile peut ajuster certains paramètres, comme l'amplitude ou la fréquence du signal de référence continu, de façon à optimiser la durée de charge ou les ressources du terminal mobile nécessaires à cette charge. Ensuite, ces paramètres représentatifs d'une qualité optimale de charge de l'accessoire de paiement sont mémorisés par le terminal mobile, éventuellement associés avec un identifiant de l'accessoire de paiement.

Selon un troisième mode de réalisation particulier de l'invention, non illustré, les étapes décrites ci-dessus dans le cadre du premier mode de réalisation sont mises en oeuvre en « inversant » les dispositifs, c'est-à-dire en considérant que le premier dispositif est le terminal mobile et que le deuxième dispositif est l'accessoire de paiement. Dans ce cas, l'auto-adaptation permet d'optimiser la qualité du signal transmis du terminal mobile vers l'accessoire de paiement.

De plus, ces différents modes de réalisation particuliers de l'invention peuvent être combinés, de façon à pouvoir optimiser la qualité des signaux échangés, dans les deux sens de communication, entre les deux dispositifs, ainsi que la charge de l'accessoire de paiement par le terminal mobile.

### 6.4 Description de deux exemples de dispositif d'auto-adaptation

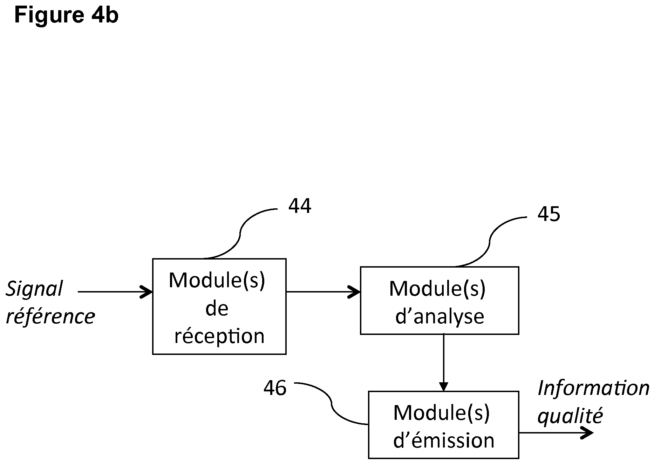

On présente maintenant, en relation avec les figures 4a et 4b, les structures simplifiées respectivement d'un premier et d'un deuxième dispositif d'auto-adaptation selon un mode de réalisation de l'invention.

Ce premier dispositif d'auto-adaptation comprend des moyens d'auto-adaptation comprenant les moyens suivants, par exemple sous la forme de modules :
- des moyens/module(s) 41 d'émission d'un signal de référence vers un dispositif électronique distinct ;
- des moyens/module(s) 42 de modification du signal de référence, en tenant compte d'au moins une information de qualité présente dans une réponse en provenance du dispositif électronique distinct, délivrant un signal de référence modifié.

Par exemple, ce dispositif d'auto-adaptation est présent dans l'accessoire de paiement du système illustré en figure 1, et/ou dans le terminal mobile illustré sur cette même figure 1.

Ce dispositif d'auto-adaptation est notamment apte à mettre en oeuvre les différentes étapes du procédé d'auto-adaptation décrit ci-dessus, selon l'un quelconque des modes de réalisation particuliers décrits ci-dessus.

Ce deuxième dispositif d'auto-adaptation comprend des moyens d'auto-adaptation comprenant les moyens suivants, par exemple sous la forme de modules :
- des moyens/module(s) 44 de réception d'un signal de référence (« *Signal référence* ») émis par un dispositif électronique distinct ;
- des moyens/module(s) 45 d'analyse du signal de référence, délivrant au moins une information représentative de la qualité du signal de référence, notée information de qualité (« *Information qualité ») ;*
- des moyens/module(s) 46 d'émission, vers le dispositif électronique distinct, de l'information de qualité.

Par exemple, ce dispositif d'auto-adaptation est présent dans le terminal mobile du système illustré en figure 1, et/ou dans l'accessoire de paiement illustré sur cette même figure 1.

Ce dispositif d'auto-adaptation est notamment apte à mettre en oeuvre les différentes étapes du procédé d'auto-adaptation décrit ci-dessus, selon l'un quelconque des modes de réalisation particuliers décrits ci-dessus.

## Revendications

1. Procédé d'auto-adaptation d'une qualité de signal de données non audio échangé via un canal audio entre un terminal mobile et un accessoire de paiement électronique connecté audit terminal mobile via la prise audio dudit terminal mobile, **caractérisé en ce qu'**il comprend une étape d'émission (21), par ledit terminal mobile, d'un premier signal de référence vers ledit accessoire de paiement électronique, et au moins une itération des étapes suivantes :
• si, avant l'expiration d'une durée prédéterminée, ledit terminal mobile reçoit une réponse en provenance dudit accessoire de paiement électronique :
o modification (22), par ledit terminal mobile, dudit premier signal de référence, en tenant compte d'au moins une information de qualité présente dans ladite réponse en provenance dudit accessoire de paiement électronique, délivrant un premier signal de référence modifié ;
o émission (23), par ledit terminal mobile, dudit premier signal de référence modifié, vers ledit accessoire de paiement électronique ;
• en l'absence de réponse en provenance dudit accessoire de paiement électronique à l'expiration de ladite durée prédéterminée, émission, par ledit terminal mobile, d'un deuxième signal de référence distinct dudit premier signal de référence vers ledit accessoire de paiement électronique.

2. **Procédé** d'auto-adaptation d'une qualité de signal de données non audio échangé via un canal audio entre un terminal mobile et un accessoire de paiement électronique connecté audit terminal mobile via la prise audio dudit terminal mobile, **caractérisé en ce qu'**il comprend au moins une itération des étapes suivantes :
• réception (24), par ledit accessoire de paiement électronique, d'un signal de référence émis par ledit terminal mobile selon le procédé de la revendication 1 ;
• analyse (25), dans ledit accessoire de paiement électronique, dudit signal de référence reçu, ladite analyse délivrant au moins une information représentative de la qualité dudit signal de référence, notée information de qualité ;
• émission (26), par ledit accessoire de paiement électronique vers ledit terminal mobile, de ladite information de qualité.

3. **Procédé** d'auto-adaptation d'une qualité de signal de données non audio échangé via un canal audio entre un terminal mobile et un accessoire de paiement électronique connecté audit terminal mobile via la prise audio dudit terminal mobile, **caractérisé en ce qu'**il comprend une étape d'émission (21), par ledit accessoire de paiement électronique, d'un premier signal de référence vers ledit terminal mobile, et au moins une itération des étapes suivantes :
• si, avant l'expiration d'une durée prédéterminée, ledit accessoire de paiement électronique reçoit une réponse en provenance dudit terminal mobile :
o modification (22), par ledit accessoire de paiement électronique, dudit premier signal de référence, en tenant compte d'au moins une information de qualité présente dans ladite réponse en provenance dudit terminal mobile, délivrant un premier signal de référence modifié ;
o émission (23), par ledit accessoire de paiement électronique, dudit premier signal de référence modifié, vers ledit terminal mobile ;
• en l'absence de réponse en provenance dudit terminal mobile à l'expiration de ladite durée prédéterminée, émission, par ledit accessoire de paiement électronique, d'un deuxième signal de référence distinct dudit premier signal de référence vers ledit terminal mobile.

4. **Procédé** d'auto-adaptation d'une qualité de signal de données non audio échangé via un canal audio entre un terminal mobile et un accessoire de paiement électronique connecté audit terminal mobile via la prise audio dudit terminal mobile, **caractérisé en ce qu'**il comprend au moins une itération des étapes suivantes :
• réception (24), par ledit terminal mobile, d'un signal de référence émis par ledit accessoire de paiement électronique selon le procédé de la revendication 3 ;
• analyse (25), dans ledit terminal mobile, dudit signal de référence reçu, ladite analyse délivrant au moins une information représentative de la qualité dudit signal de référence, notée information de qualité ;
• émission (26), par ledit terminal mobile vers ledit accessoire de paiement électronique, de ladite information de qualité.

5. **Procédé** d'auto-adaptation selon la revendication 2 ou la revendication 4, **caractérisé en ce que** ladite étape d'analyse tient compte d'au moins un critère prédéterminé représentatif d'une qualité souhaitée.

6. **Procédé** d'auto-adaptation selon la revendication 5, **caractérisé en ce que** ledit critère prédéterminé correspond à un seuil maximum de distorsion.

7. **Procédé** d'auto-adaptation selon la revendication 5, **caractérisé en ce que** ladite étape d'analyse comprend les sous-étapes suivantes :
• traitement dudit signal de référence délivrant au moins un paramètre de qualité dudit signal de référence ;
• comparaison dudit paramètre de qualité avec ledit critère prédéterminé, délivrant ladite au moins une information de qualité.

8. **Procédé** d'auto-adaptation selon l'une quelconque des revendications 1 à 4, **caractérisé en ce que** ladite information de qualité appartient au groupe comprenant au moins :
• une information de réduction ou d'augmentation d'amplitude dudit signal de référence ;
• une information de modification de fréquence dudit signal de référence ;
• une information de modification de la forme dudit signal de référence ;
• une information de modification du débit dudit signal de référence ;
• une information de validation dudit signal de référence ;
• une information combinant au moins deux desdites informations précitées.

9. **Procédé** d'auto-adaptation selon l'une quelconque des revendications 1 à 4, **caractérisé en ce qu'**il comprend une étape de mémorisation, dans ledit terminal mobile et/ou ledit accessoire de paiement électronique, d'au moins un paramètre de transmission dudit signal de données, lorsque ladite information de qualité est une information de validation dudit signal de référence.

10. **Procédé** d'auto-adaptation selon la revendication 9, **caractérisé en ce que** ledit paramètre de transmission appartient au groupe comprenant :
• une valeur d'amplitude de signal de données ;
• une valeur de fréquence de signal de données ;
• un type de forme de signal de données ;
• un prétraitement de signal de données ;
• une information combinant au moins deux desdites valeurs précitées.

11. **Procédé** d'auto-adaptation selon la revendication 9, **caractérisé en ce que** ladite étape de mémorisation mémorise également un paramètre d'identification dudit terminal mobile et/ou dudit accessoire de paiement électronique.

12. **Procédé** d'auto-adaptation selon la revendication 9, **caractérisé en ce qu'**il comprend une étape de transmission, par ledit terminal mobile vers ledit accessoire de paiement électronique, d'au moins un signal de données, ladite étape de transmission tenant compte dudit au moins un paramètre de transmission mémorisé lors de ladite étape de mémorisation.

13. **Procédé** d'auto-adaptation selon la revendication 12, **caractérisé en ce que** ladite information de qualité correspond à une information représentative d'un niveau de charge dudit accessoire de paiement.

14. **Procédé** d'auto-adaptation selon la revendication 13, **caractérisé en ce qu'**il comprend une étape préalable de décharge dudit accessoire de paiement.

15. **Terminal mobile** comprenant des moyens d'auto-adaptation d'une qualité de signal de données non audio échangé via un canal audio vers un accessoire de paiement électronique connecté audit terminal mobile via la prise audio dudit terminal mobile, **caractérisé en ce que** lesdits moyens d'auto-adaptation comprennent au moins les moyens suivants :
• des moyens (41) d'émission d'un signal de référence vers ledit accessoire de paiement électronique ;
• des moyens (42) de modification dudit signal de référence, en tenant compte d'au moins une information de qualité présente dans ladite réponse en provenance dudit accessoire de paiement électronique, délivrant un signal de référence modifié.

16. **Accessoire de paiement électronique** comprenant des moyens d'auto-adaptation d'une qualité de signal de données non audio échangé via un canal audio vers un terminal mobile auquel ledit accessoire de paiement électronique est connecté via la prise audio dudit terminal mobile, **caractérisé en ce que** lesdits moyens d'auto-adaptation comprennent au moins les moyens suivants :
• des moyens (44) de réception d'un signal de référence émis par ledit terminal mobile selon la revendication 15 ;
• des moyens (45) d'analyse dudit signal de référence, lesdits moyens d'analyse délivrant au moins une information représentative de la qualité dudit signal de référence, notée information de qualité ;
• des moyens (46) d'émission, vers ledit terminal mobile, de ladite information de qualité.

17. **Accessoire de paiement électronique** comprenant des moyens d'auto-adaptation d'une qualité de signal de données non audio échangé via un canal audio vers un terminal mobile auquel ledit accessoire de paiement électronique est connecté via la prise audio dudit terminal mobile, **caractérisé en ce que** lesdits moyens d'auto-adaptation comprennent au moins les moyens suivants :
• des moyens (41) d'émission d'un signal de référence vers ledit terminal mobile ;
• des moyens (42) de modification dudit signal de référence, en tenant compte d'au moins une information de qualité présente dans ladite réponse en provenance dudit terminal mobile, délivrant un signal de référence modifié.

18. **Terminal mobile** comprenant des moyens d'auto-adaptation d'une qualité de signal de données non audio échangé via un canal audio vers un accessoire de paiement électronique connecté audit terminal mobile via la prise audio dudit terminal mobile, **caractérisé en ce que** lesdits moyens d'auto-adaptation comprennent au moins les moyens suivants :
• des moyens (44) de réception d'un signal de référence émis par ledit accessoire de paiement électronique selon la revendication 17 ;
• des moyens (45) d'analyse dudit signal de référence, lesdits moyens d'analyse délivrant au moins une information représentative de la qualité dudit signal de référence, notée information de qualité ;
• des moyens (46) d'émission, vers ledit accessoire de paiement électronique, de ladite information de qualité.

19. **Programme d'ordinateur** comprenant des instructions de code de programme pour l'exécution des étapes du procédé d'auto-adaptation selon l'une quelconque des revendications 1 à 14 lorsque ledit programme est exécuté sur un ordinateur.

## Patentansprüche

1. Verfahren zur Selbstanpassung einer Qualität eines Nicht-Audio-Datensignals, das über einen Audiokanal zwischen einem mobilen Endgerät und einer elektronischen Zahlungseinrichtung, die an das mobile Endgerät über den Audioanschluss des mobilen Endgeräts angeschlossen ist, **dadurch gekennzeichnet, dass** es einen Schritt des Sendens (21) eines ersten Referenzsignals zu der elektronischen Zahlungseinrichtung durch das mobile Endgerät und mindestens eine Iteration der folgenden Schritte umfasst:
• wenn vor Ablauf einer vorbestimmten Dauer das mobile Endgerät eine Antwort von der elektronischen Zahlungseinrichtung erhält:
∘ durch das mobile Endgerät Modifikation (22) des ersten Referenzsignals unter Berücksichtigung mindestens einer Qualitätsinformation, die in der von der elektronischen Zahlungseinrichtung kommenden Antwort vorhanden ist, die ein erstes modifiziertes Referenzsignal liefert;
∘ durch das mobile Endgerät Senden (23) des ersten modifizierten Referenzsignals zu der elektronischen Zahlungseinrichtung;
• bei Nichtvorhandensein einer Antwort von der elektronischen Zahlungseinrichtung nach Ablauf der vorbestimmten Dauer Senden eines zweiten Referenzsignals, das sich vom ersten Referenzsignal unterscheidet, durch das mobile Endgerät zu der elektronischen Zahlungseinrichtung.

2. Verfahren zur Selbstanpassung einer Qualität eines Nicht-Audio-Datensignals, das über einen Audiokanal zwischen einem mobilen Endgerät und einer elektronischen Zahlungseinrichtung, die an das mobile Endgerät über den Audioanschluss des mobilen Endgeräts angeschlossen ist, **dadurch gekennzeichnet, dass** es mindestens eine Iteration der folgenden Schritte umfasst:
• durch die elektronische Zahlungseinrichtung Empfang (24) eines Referenzsignals, das von dem mobilen Endgerät gemäß dem Verfahren des Anspruchs 1 gesandt wird;
• in der elektronischen Zahlungseinrichtung Analyse (25) des empfangenen Referenzsignals, wobei die Analyse mindestens eine Information liefert, die für die Qualität des Referenzsignals repräsentativ ist, Qualitätsinformation genannt;
• durch die elektronische Zahlungseinrichtung Senden (26) der Qualitätsinformation über das mobile Endgerät.

3. Verfahren zur Selbstanpassung einer Qualität eines Nicht-Audio-Datensignals, das über einen Audiokanal zwischen einem mobilen Endgerät und einer elektronischen Zahlungseinrichtung, die an das mobile Endgerät über den Audioanschluss des mobilen Endgeräts angeschlossen ist, **dadurch gekennzeichnet, dass** es einen Schritt des Sendens (21) eines ersten Referenzsignals zu dem mobilen Endgerät durch die elektronische Zahlungseinrichtung und mindestens eine Iteration der folgenden Schritte umfasst:
• wenn vor Ablauf einer vorbestimmten Dauer die elektronische Zahlungseinrichtung eine Antwort von dem mobilen Endgerät erhält:
∘ durch die elektronische Zahlungseinrichtung Modifikation (22) des ersten Referenzsignals unter Berücksichtigung mindestens einer Qualitätsinformation, die in der von dem mobilen Endgerät kommenden Antwort vorhanden ist, die ein erstes modifiziertes Referenzsignal liefert;
∘ durch die elektronische Zahlungseinrichtung Senden (23) des ersten modifizierten Referenzsignals zu dem mobilen Endgerät;
• bei Nichtvorhandensein einer Antwort von dem mobilen Endgerät nach Ablauf der vorbestimmten Dauer Senden eines zweiten Referenzsignals, das sich vom ersten Referenzsignal unterscheidet, durch die elektronische Zahlungseinrichtung zu dem mobilen Endgerät.

4. Verfahren zur Selbstanpassung einer Qualität eines Nicht-Audio-Datensignals, das über einen Audiokanal zwischen einem mobilen Endgerät und einer elektronischen Zahlungseinrichtung, die an das mobile Endgerät über den Audioanschluss des mobilen Endgeräts angeschlossen ist, **dadurch gekennzeichnet, dass** es mindestens eine Iteration der folgenden Schritte umfasst:
• durch das mobile Endgerät Empfang (24) eines Referenzsignals, das von der elektronischen Zahlungseinrichtung gemäß dem Verfahren des Anspruchs 3 gesandt wird;
• in dem mobilen Endgerät Analyse (25) des empfangenen Referenzsignals, wobei die Analyse mindestens eine Information liefert, die für die Qualität des Referenzsignals repräsentativ ist, Qualitätsinformation genannt;
• durch das mobile Endgerät Senden (26) der Qualitätsinformation zu der elektronischen Zahlungseinrichtung.

5. Verfahren zur Selbstanpassung nach Anspruch 2 oder 4, **dadurch gekennzeichnet, dass** der Analyseschritt mindestens ein vorbestimmtes Kriterium, das für eine gewünschte Qualität repräsentativ ist, berücksichtigt.

6. Verfahren zur Selbstanpassung nach Anspruch 5, **dadurch gekennzeichnet, dass** das vorbestimmte Kriterium einer maximalen Verzerrungsschwelle entspricht.

7. Verfahren zur Selbstanpassung nach Anspruch 5, **dadurch gekennzeichnet, dass** die Analyse die folgenden Unterschritte umfasst:
• Verarbeitung des Referenzsignals, die mindestens einen Qualitätsparameter des Referenzsignals liefert;
• Vergleich des Qualitätsparameters mit dem vorbestimmten Kriterium, der die mindestens eine Qualitätsinformation liefert.

8. Verfahren zur Selbstanpassung nach einem der Ansprüche 1 bis 4, **dadurch gekennzeichnet, dass** die Qualitätsinformation der Gruppe angehört, die mindestens umfasst:
• eine Information über eine Verringerung oder Vergrößerung der Amplitude des Referenzsignals;
• eine Information über eine Frequenzänderung des Referenzsignals;
• eine Information über eine Änderung der Form des Referenzsignals;
• eine Information über eine Änderung der Durchgangsmenge des Referenzsignals;
• eine Information über die Validierung des Referenzsignals;
• eine Information, die mindestens zwei der vorgenannten Informationen kombiniert.

9. Verfahren zur Selbstanpassung nach einem der Ansprüche 1 bis 4, **dadurch gekennzeichnet, dass** es einen Schritt der Speicherung in dem mobilen Endgerät und/oder der elektronischen Zahlungseinrichtung mindestens eines Übertragungsparameters des Datensignals umfasst, wenn die Qualitätsinformation eine Information über eine Validierung des Referenzsignals ist.

10. Verfahren zur Selbstanpassung nach Anspruch 9, **dadurch gekennzeichnet, dass** der Übertragungsparameter der Gruppe angehört, die umfasst:
• einen Wert einer Amplitude eines Datensignals;
• einen Frequenzwert eines Datensignals;
• einen Formtypus eines Datensignals;
• eine Vorbearbeitung eines Datensignals;
• eine Information, die mindestens zwei der vorgenannten Werte kombiniert.

11. Verfahren zur Selbstanpassung nach Anspruch 9, **dadurch gekennzeichnet, dass** der Speicherschritt auch einen Identifikationsparameter des mobilen Endgeräts und/oder der elektronischen Zahlungseinrichtung speichert.

12. Verfahren zur Selbstanpassung nach Anspruch 9, **dadurch gekennzeichnet, dass** es einen Schritt der Übertragung mindestens eines Datensignals durch das mobile Endgerät zu der elektronischen Zahlungseinrichtung umfasst, wobei der Übertragungsschritt den mindestens einen Übertragungsparameter, der während des ersten Speicherschritts gespeichert wird, berücksichtigt.

13. Verfahren zur Selbstanpassung nach Anspruch 12, **dadurch gekennzeichnet, dass** die Qualitätsinformation einer Information entspricht, die für ein Belastungsniveau der Zahlungseinrichtung repräsentativ ist.

14. Verfahren zur Selbstanpassung nach Anspruch 13, **dadurch gekennzeichnet, dass** es einen vorherigen Schritt der Entlastung der Zahlungseinrichtung umfasst.

15. Mobiles Endgerät, umfassend Mittel zur Selbstanpassung einer Qualität eines Nicht-Audio-Datensignals, das über einen Audiokanal zwischen einem mobilen Endgerät und einer elektronischen Zahlungseinrichtung, die an das mobile Endgerät über den Audioanschluss des mobilen Endgeräts angeschlossen ist, **dadurch gekennzeichnet, dass** die Mittel zur Selbstanpassung mindestens die folgenden Mittel umfassen:
• Mittel (41) zum Senden eines Referenzsignals zu der elektronischen Zahlungseinrichtung;
• Mittel (42) zur Modifikation des Referenzsignals unter Berücksichtigung mindestens einer Qualitätsinformation, die in der Antwort von der elektronischen Zahlungseinrichtung vorhanden ist, die ein modifiziertes Referenzsignal liefern.

16. Elektronische Zahlungseinrichtung, umfassend Mittel zur Selbstanpassung einer Qualität eines Nicht-Audio-Datensignals, das über einen Audiokanal zwischen einem mobilen Endgerät und einer elektronischen Zahlungseinrichtung, die an das mobile Endgerät über den Audioanschluss des mobilen Endgeräts angeschlossen ist, **dadurch gekennzeichnet, dass** die Mittel zur Selbstanpassung mindestens die folgenden Mittel umfassen:
• Mittel (44) zum Empfang eines Referenzsignals, das von dem mobilen Endgerät gemäß Anspruch 15 gesandt wird;
• Mittel (45) zur Analyse des Referenzsignals, wobei die Analysemittel mindestens eine Information liefern, die für die Qualität des Referenzsignals repräsentativ ist, Qualitätsinformation genannt;
• Mittel (46) zum Senden der Qualitätsinformation zu dem mobilen Endgerät.

17. Elektronische Zahlungseinrichtung, umfassend Mittel zur Selbstanpassung einer Qualität eines Nicht-Audio-Datensignals, das über einen Audiokanal zwischen einem mobilen Endgerät und einer elektronischen Zahlungseinrichtung, die an das mobile Endgerät über den Audioanschluss des mobilen Endgeräts angeschlossen ist, **dadurch gekennzeichnet, dass** die Mittel zur Selbstanpassung mindestens die folgenden Mittel umfassen:
• Mittel (41) zum Senden eines Referenzsignals zu dem mobilen Endgerät;
• Mittel (42) zur Modifikation des Referenzsignals unter Berücksichtigung mindestens einer Qualitätsinformation, die in der Antwort von dem mobilen Endgerät vorhanden ist, die ein modifiziertes Referenzsignal liefern.

18. Mobiles Endgerät, umfassend Mittel zur Selbstanpassung einer Qualität eines Nicht-Audio-Datensignals, das über einen Audiokanal zwischen einem mobilen Endgerät und einer elektronischen Zahlungseinrichtung, die an das mobile Endgerät über den Audioanschluss des mobilen Endgeräts angeschlossen ist, **dadurch gekennzeichnet, dass** die Mittel zur Selbstanpassung mindestens die folgenden Mittel umfassen:
• Mittel (44) zum Empfang eines Referenzsignals, das von der elektronischen Zahlungseinrichtung gemäß Anspruch 17 gesandt wird;
• Mittel (45) zur Analyse des Referenzsignals, wobei die Analysemittel mindestens eine Information liefern, die für die Qualität des Referenzsignals repräsentativ ist, Qualitätsinformation genannt;
• Mittel (46) zum Senden der Qualitätsinformation zu der elektronischen Zahlungseinrichtung.

19. Computerprogramm, umfassend Programmcodebefehle für die Ausführung der Schritte des Verfahrens zur Selbstanpassung nach einem der Ansprüche 1 bis 14, wenn das Programm auf einem Computer ausgeführt wird.

## Claims

1. Method of self-adaptation of a quality of non-audio data signal exchanged via an audio channel between a mobile terminal and an electronic payment accessory connected to said mobile terminal via the audio jack of said mobile terminal, **characterized in that** it comprises a step for the sending (21), by said first mobile terminal, of a first reference signal to said electronic payment accessory, and at least one iteration of the following steps:
• if, before the expiry of a predetermined duration, said mobile terminal receives a response coming from said electronic payment accessory:
o modification (22), by said mobile terminal, of said first reference signal in taking account of at least one piece of quality information present in said response coming from said electronic payment accessory, delivering a first modified reference signal;
o sending (23), by said mobile terminal, of said first modified reference signal to said electronic payment accessory;
• when there is no response coming from said electronic payment accessory at the expiry of the predetermined duration, the sending by said mobile terminal of a second reference signal, distinct from the first reference signal, to said electronic payment accessory.

2. Method of self-adaptation of a quality of non-audio data signal exchanged via an audio channel between a mobile terminal and an electronic payment accessory connected to said mobile terminal via the audio jack of said mobile terminal, **characterized in that** it comprises at least one iteration of the following steps:
• reception (24), by said electronic payment accessory, of a reference signal sent by said mobile terminal according to the method of claim 1;
• analysis (25) of said received reference signal in said electronic payment accessory, the analysis delivering at least one piece of information representing the quality of the reference signal denoted as quality information;
• sending (26) of said quality information by said electronic payment accessory to said mobile terminal.

3. Method of self-adaptation of a quality of non-audio data signal exchanged via an audio channel between a mobile terminal and an electronic payment accessory connected to said mobile terminal via the audio jack of said mobile terminal, **characterized in that** it comprises a step for the sending (21), by said electronic payment accessory, of a first reference signal to said mobile terminal, and at least one iteration of the following steps:
• if, before the expiry of a predetermined duration, said electronic payment accessory receives a response coming from said mobile terminal:
o modification (22), by said electronic payment accessory, of said first reference signal in taking account of at least one piece of quality information present in the response coming from said mobile terminal, delivering a first modified reference signal;
o sending (23), by said electronic payment device, of said first modified reference signal to said mobile terminal;
• when there is no response coming from said mobile terminal at the expiry of said predetermined duration, the sending by said electronic payment accessory of a second reference signal, distinct from said first reference signal, to said mobile terminal.

4. Method of self-adaptation of a quality of non-audio data signal exchanged via an audio channel between a mobile terminal and an electronic payment accessory connected to said mobile terminal via the audio jack of said mobile terminal, **characterized in that** it comprises at least one iteration of the following steps:
• reception (24), by said mobile terminal of a reference signal sent by said electronic payment accessory according to the method of claim 3 ;
• analysis (25), in said mobile terminal, of said received reference signal, said analysis delivering at least one piece of information representing the quality of said reference signal denoted as quality information;
• sending (26) of said quality information by said mobile terminal to said electronic payment accessory.

5. Method of self-adaptation according to claim 2 or claim 4, **characterized in that** said step of analysis takes account of at least one predetermined criterion representing a desired quality.

6. Method of self-adaptation according to claim 5, **characterized in that** said predetermined criterion corresponds to a maximum distortion threshold.

7. Method of self-adaptation according to claim 5, **characterized in that** said step of analysis comprises the following sub-steps:
• processing said reference signal delivering at least one quality parameter of said reference signal;
• comparing said quality parameter with said predetermined criterion, delivering said at least one piece of quality information.

8. Method of self-adaptation according to any one of the claims 1 to 4, **characterized in that** said quality information belongs to the group comprising at least :
• one piece of information on reduction or increase of amplitude of said reference signal;
• one piece of information on modification of frequency of said reference signal;
• a piece of information on modification of the shape of said reference signal;
• one piece of information on modification of the rate of said reference signal;
• one piece of information on validation of said reference signal;
• one piece of information combining at least two of the above-mentioned said pieces of information.

9. Method of self-adaptation according to any one of the claims 1 to 4, **characterized in that** it comprises a step of memorization, in said mobile terminal and/or said electronic payment accessory, of at least one transmission parameter of said data signal when said quality information is a piece of information on validation of the reference signal.

10. Method of self-adaptation according to claim 9, **characterized in that** said transmission parameter belongs to the group comprising:
• a value of amplitude of a data signal;
• a value of frequency of a data signal;
• a shape of a data signal;
• a pre-processing of a data signal;
• a piece of information combining at least two of the above-mentioned values.

11. Method of self-adaptation according to claim 9, **characterized in that** said step of memorization also memorizes a parameter of identification of said mobile terminal and/or said electronic payment accessory.

12. Method of self-adaptation according to **claim** 9, **characterized in that** it comprises a step of transmission of at least one data signal by said mobile terminal to said electronic payment accessory, the step of transmission taking account of said at least one transmission parameter memorized during the memorizing step.

13. Method of self-adaptation according to claim 12, **characterized in that** said quality information corresponds to a piece of information representing a level of charging of said payment accessory.

14. Method of self-adaptation according to claim 13, **characterized in that** it comprises a preliminary step for charging down said payment accessory.

15. Mobile terminal comprising means of self-adaptation of a quality of non-audio data signal sent via an audio channel to an electronic payment accessory, **characterized in that** said self-adaptation means comprise at least one of the following means:
• means (41) for sending a reference signal to said electronic payment accessory;
• means (42) for modifying said reference signal in taking account of at least one piece of quality information present in said response coming from said electronic payment accessory, delivering a modified reference signal.

16. **Electronic payment accessory,** comprising means of self-adaptation of a non-audio data quality signal sent via an audio channel to a mobile terminal to which said electronic payment accessory is connected via the audio jack of said mobile terminal, **characterized in that** said means of self-adaptation comprise at least the following means:
• means (44) for receiving a reference signal sent by said mobile terminal according to claim 15;
• means (45) for analyzing said reference signal, said means for analyzing delivering at least one piece of information representing the quality of the reference signal, denoted as quality information;
• means (46) for sending said quality information to said mobile terminal.

17. **Electronic payment accessory** comprising means of self-adaptation of a non-audio data quality signal sent via an audio channel to a mobile terminal to which said electronic payment accessory is connected via the audio jack of said mobile terminal, **characterized in that** said means of self-adaptation comprise at least the following means :
• means (41) for sending a reference signal to said terminal mobile ;
• means (42) for modifying said reference signal in taking account of at least one piece of quality information present in a response coming from said mobile terminal, delivering a modified reference signal.

18. Mobile terminal comprising means of self-adaptation of a non-audio data quality signal sent via an audio channel to an electronic payment accessory connected to said mobile terminal via the audio jack of said mobile terminal, **characterized in that** said means of self-adaptation comprise at least the following means:
• means (44) for receiving a reference signal sent by said electronic payment accessory according to claim 17;
• means (45) for analyzing said reference signal, said means for analyzing delivering at least one piece of information representing the quality of said reference signal, denoted as quality information;
• means (46) for sending said piece of quality information to said electronic payment accessory.

19. Computer program comprising program code instructions for executing the steps of the method of self-adaptation according to any one of the claims 1 to 14, when said program is executed on a computer.
